Europäisches Patentamt

European Patent Office

Office européen des brevets

(11) Publication number: **0 462 393 A1**

## EUROPEAN PATENT APPLICATION

(21) Application number: **91107656.0**

(22) Date of filing: **11.05.91**

(51) Int. Cl.5: **A22C 13/00**

(30) Priority: **19.06.90 US 540034**

(43) Date of publication of application:
**27.12.91 Bulletin 91/52**

(84) Designated Contracting States:
**AT BE CH DE DK ES FR GB IT LI NL SE**

(71) Applicant: **Teepak, Inc.**
**Three Westbrook Corporate Center Suite 1000**
**Westchester, IL 60154(US)**

(72) Inventor: **Appleby, Douglas E.**
**404 E. Winter**
**Danville, Illinois 61832(US)**
Inventor: **Brooks, Marvin R.**
**R.R. Nr. 2 Box 95**
**Georgetown, Illinois 61846(US)**

(74) Representative: **Weber, Dieter, Dr. et al**
**Dr. Dieter Weber und Dipl.-Phys. Klaus Seiffert Patentanwälte**
**Gustav-Freytag-Strasse 25 Postfach 6145**
**W-6200 Wiesbaden 1(DE)**

(54) Catalyzed polysiloxanes as release additives for cellulose containing casings.

(57) A tubular food casing internally coated with a release coating comprising polysiloxane cured in situ. The invention also includes a packaged food product comprising the casing and the method of making the casing.

EP 0 462 393 A1

## Background of the Invention

This invention relates to release additives, for improved food casings and more particularly to coatings for cellulosic containing food casings which impart food release characteristics thereto.

The packaging of items in flexible casings is practiced worldwide with numerous products. Such casings are particularly suitable for consumer packaging and/or processing packaging of emulsified foods, such as sausage meat products, processed dairy cheese products and other foods of similar consistency.

In the manufacture of regenerated cellulose sausage casings, viscose is typically extruded through an annular die into a coagulating and regenerating bath to produce a tube of regenerated cellulose. The tube is subsequently washed, plasticized and dried while inflated under substantial air pressure. After drying, the casing is wound on reels and may then be subsequently shirred on high-speed shirring machines, such as those described in U.S. Patents 2,010,626; 2,583,654; 2,722,714; 2,722,715; 2,723,201; and 3,451,827. In the shirring process, lengths of from about 40 to about 200 feet of casing are typically compacted (shirred) into strands of between about 4 and about 30 inches. The casing in reel form or in strands, is packaged and provided to the meat processor where they are stuffed with meat or other food products. The meat can be subsequently cooked or smoked, dried, or a mixture thereof and the casing removed from the meat or other food product either at the meat packing plant or by the consumer.

It has been useful to internally apply a release agent to cellulose casings during the shirring process by spraying through the shirring mandrel to coat the interior of the casing with the agent. In many such release coating packaging applications, it is desirable to retain moisture transfer rate through the casing so that drying of the contained product is as rapid as possible. Poor moisture transport also tends to cause undesirable protein-fat separation. It is also desirable to maintain a stable, long lasting release effect. It would also be desirable to be able to tailor or adjust the release effect for a particular application.

Prior art release coatings have not met the above requirements as well as desired. For example, some of such release coatings inhibited moisture transfer through the casing, were subject to storage problems, e.g. possible biological degradation, and could not easily be tailored for a particular application. Furthermore, many such release agents did not function well at low moisture levels, e.g. dried sausage applications. Additionally, some such release coatings could not be applied to casings having 5 or more percent moisture which required an undesirable predrying step.

In United States Patent 3,898,348, the coating of internal surfaces of cellulose sausage casings with a homogeneous mixture of a water soluble cellulose ether and an additive selected from animal, vegetable, mineral and silicon oils and alkylene oxide adducts of partial fatty acid esters has been proposed. Such materials have been found to have good peelability characteristics, but do not function well at low moisture levels. Additionally, it is difficult to reliably adjust the release characteristics over a broad range.

United States Patent 4,137,947 to Bridgeford discloses a method of improving the peelability of cellulose sausage casings by the application of a meat release coating to the internal surface thereof. The coating comprises a homogeneous admixture of a water soluble cellulose ether, the partial fatty acid ester of sorbitan or mannitan and a water soluble polyalkylene ether. An aqueous coating composition containing the water soluble cellulose ether, partial fatty acid ester and polyalkylene ether is typically applied to the interior of the sausage casing prior to shirring. While this has been a successful meat release agent for stuffed casing problems with adjustability and operability at low moisture still exist as previously described.

Therefore, there remains a need for a release agent composition having reduced disadvantages when compared with prior compositions.

## Brief Description of the Invention

In accordance with the invention, there is therefore provided a tubular food casing product internally coated with a release coating comprising polysiloxane cured in situ.

The invention also includes a packaged food product comprising the casing and the method of making the casing.

## Detailed Description of the Invention

Suitable polysiloxanes for use as meat release coatings for food casings, e.g. regenerated cellulose sausage casings, include cured di-loweralkylpolysiloxanes such as dimethylpolysiloxane, methylethylpolysiloxane, and diethylpolysiloxane. Lower alkyl, as used herein, means fewer than five carbon atoms. The most preferred polysiloxane is dimethylpolysiloxane.

The polysiloxane is usually diluted with a nontoxic liquid carrier before catalyst curing agent is added to form a polysiloxane containing liquid. The preferred liquid is water. Emulsifiers may be added to assist the dilution. A preferred liquid polysiloxane for use in accordance with the invention contains from about 0.25 to about 25 weight percent solids and most preferably contains from about 1 to about 20 weight percent solids. The solids are usually suspended in the form of an emulsion.

Lower solids are used where reduced release activity is desired, e.g. in the case of dried sausage such as pepperoni where controlled adhesion to the casing is desired so that the casing shrinks with the sausage to avoid unsightly air or fat pockets between the sausage and the casing; yet provides sufficient release so that the consumer can easily remove the casing from the contained meat product.

Higher solids are used where greater release characteristics are desired, e.g. for automated skinless hot dog or ham production.

Any suitable polysiloxane curing agent may be used, e.g. dibutyltindilaurate, stannous oleate and tetrabutyl titanate. Such curing agents are usually suspended or dissolved in a non-toxic carrier liquid. The preferred liquid is water. Emulsifiers may be included to aid suspension. In the case of dibutyltindilaurate, preferably from 35 - 39 weight percent of the catalyst is suspended in water to form the catalyst component. The liquid catalyst component is mixed with the liquid polysiloxane on a weight solids basis at a ratio of from about 0.05:1 to 0.075:1 of catalyst to polysiloxane. For example, in the case of dibutyltindilaurate about 25 ml of 35 - 39 percent solids liquid catalyst would be mixed with a liter of 15 percent solids liquid polysiloxane to obtain a 15 percent solids catalyst product. In general all dilutions are desirably performed upon the liquid polysiloxane before the catalyst is added to the polysiloxane.

In making the product the internal surface of the casing is coated with the polysiloxane, either in diluted or undiluted form in conjunction with a catalyst, followed by heat curing.

The thickness of the coating varies depending upon the dilution and volume of liquid applied. In general, such coatings will have a thickness of from 0.1 to about 100 microns and preferably from about 0.5 to 20 microns.

The most preferred casings are large and small code (e.g. 1 cm to 25 cm diameter) reenforced or unreenforced tubular regenerated cellulose sausage casings. Such sausage casings may be internally coated by any suitable means, e.g. slug coating where a volume of liquid comprising the polysiloxane is introduced into a low portion of the casing and the casing is drawn around it; by external coating followed by everting the casing or by internally spraying.

After the catalyzed polysiloxane is applied, the food casing is heated to cure the coating. In general the heating temperature is from 140 to 250° F and may occur simultaneously with drying during casing manufacture. Drying time is usually from 1 to 10 minutes, preferably 1 to 5 minutes. In general any temperature above about 140° F may be used for any time period; provided that, the time is not so long and the temperature so high that the coating or casing is significantly degraded.

The release coated food casing of the invention has significant advantages over prior art release casings. In particularly the degree of release can be more precisely controlled. Moisture transport through the casing remains satisfactory and better release activity can be obtained. Additionally, the life of the release characteristics are long, adhesion to the casing is excellent and the release activity is retained at all moisture levels commonly encountered in food processing.

Furthermore, when dimethylpolysiloxane is used in conjunction with dibutyltindilaurate catalyst, toxicity is exceedingly low and the components may be approved for food use.

The coating can be applied and cured on casings containing at least 5 percent water and perhaps as much as ten or more percent water.

Example 1.

A code T8, about 12 cm inside diameter, regenerated cellulose food casing was internally coated, prior to drying, during casing manufacture, with a 14 to 15 percent dimethylpolysiloxane aqueous suspension catalyzed with 25 ml of a 35 - 39 percent aqueous suspension of dibutyltindilaurate per liter of polysiloxane. Gentle mixing of the polysiloxane and catalyst liquids was used to prevent breaking of the suspension.

The catalyzed liquid was internally applied using slug or bubble coating. The casing was then dried and the coating cured at 250° C for 3 minutes. The casing temperature reached about 200° C during the drying and curing step.

Processed ham was then stuffed into the casing. After the ham was cooked, the casing showed gocd release characteristics.

A sample of the coated casing was dissolved in nitric acid and tested for silicon by emission spectrophotometry. The add on of silicone was then calculated to be about 1 microgram per square centimeter or about 1 micron coating thickness.

Example 2.

Example 1 was repeated except that a code 15, about 4-9 cm inside diameter, casing was used. The polysiloxane liquid of Example 1 was diluted 8:1 with water with gentle mixing, prior to addition of the catalyst. About 3 ml of the 35 - 39 percent solids catalyst liquid per liter of diluted polysiloxane was added.

The finished casing was stuffed with pepperoni meat and dried. The casing adhered to the meat during drying and was readily peeled from the dried pepperoni without significant damage to the meat.

Example 3.

Example 2 was repeated except the polysiloxane liquid of Example 1 was diluted 12:1 with water and about 2 ml of the catalyst solution per liter of diluted polysiloxane was added. Again the casing adhered to the pepperoni during drying but was subsequently readily removed without significant damage to the meat.

## Claims

1. A tubular food casing internally coated with a release coating comprising an in situ cured catalyzed polysiloxane.

2. The food casing of Claim 1 wherein the polysiloxane is dimethylpolysiloxane.

3. The food casing of Claim 1 or 2 wherein the polysiloxane is catalyzed with dibutyltindilaurate.

4. The food casing of one of the claims 1 to 3 wherein the food casing comprises regenerated cellulose.

5. The casing of one of the Claims 1 to 4 wherein the thickness of the coating is from 0.5 to 20 microns.

6. A method for manufacturing a food casing internally coated with a release coating comprising an in situ cured catalyzed polysiloxane, which method comprises:
   a) coating the interior of the casing with an aqueous liquid comprising from about 0.25 to about 25 weight percent suspended polysiloxane in a solids weight ratio of from about 0.05 : 1 to 0.075 : 1 catalyst to polysiloxane;
   b) curing the casing at from about 140 to about 240 °F for from about 1 to about 10 minutes.

7. The method of Claim 6 wherein the polysiloxane is dimethylpolysiloxane and the catalyst is dibutyltindilaurate.

8. The method of Claim 6 or 7 wherein the food casing is a regenerated cellulose sausage casing.

9. The method of one of the Claims 6 to 8 wherein the aqueous liquid comprises from about 1 to about 15 weight percent polysiloxane.

10. An encased sausage comprising the food casing of one of the Claims 1 to 7.

European
Patent Office

**EUROPEAN SEARCH
REPORT**

Application Number

**EP 91 10 7656**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 442 663  (A.F. TURBAK)<br>* Whole document * | 1-10 | A 22 C 13/00 |
| A | DE-A-1 905 336  (UCC)<br>* Claims 1-7 * | 1 | |
| A | US-A-3 307 956  (H.S. CHIU)<br>* Claims 1-10; column 2, lines 21-67 * | 1 | |
| A | DE-A-3 447 026  (HOECHST)<br>* Claims 1-5 * | 1 | |

TECHNICAL FIELDS
SEARCHED (Int. Cl.5)

A 22 C
C 08 J

The present search report has been drawn up for all claims

| Place of search | Date of completion of search | Examiner |
|---|---|---|
| The Hague | 28 August 91 | PERMENTIER W.A. |